# EUROPÄISCHE PATENTSCHRIFT

(11) **EP 0 867 058 B1**
(45) Veröffentlichungstag und Bekanntmachung des Hinweises auf die Patenterteilung: **09.06.1999**
(21) Anmeldenummer: 96938134.2
(22) Anmeldetag: 07.11.1996
(51) Int. Cl.: H02B 1/40, H02B 1/28

(54) **DK-LWL-RANGIERVERTEILER MIT ZWEI AUFNAHMEKAMMERN**
DISTRIBUTION DEVICE FOR ARRANGING DIELECTRIC-CONSTANT OPTICAL FIBRES AND HAVING TWO RECEIVING CHAMBERS
DISPOSITIF DE DISTRIBUTION A DEUX CHAMBRES D'INSERTION POUR L'AGENCEMENT DE FIBRES OPTIQUES A CONSTANTE DIELECTRIQUE

(30) Priorität: 16.12.1995 DE 19547135
(43) Veröffentlichungstag der Anmeldung: 30.09.1998
(73) Patentinhaber: Rittal-Werk Rudolf Loh GmbH & Co. KG, 35745 Herborn (DE)
(72) Erfinder: BESSERER, Horst, D-35745 Herborn (DE); HARTEL, Marc, D-35447 Reiskirchen (DE); PETROTTA, Gianmaria, D-35630 Ehringshausen-Katzenfurt (DE)
(74) Vertreter: Fleck, Hermann-Josef, Dr.-Ing.
(86) Internationale Anmeldenummer: EP9604871
(87) Internationale Veröffentlichungsnummer: WO9723023

(56) Entgegenhaltungen:
- DE-A- 2 720 936
- US-A- 4 805 073
- US-A- 4 945 559
- US-A- 5 109 467
- US-A- 5 274 731

## Beschreibung

Die Erfindung betrifft einen Datenkommunikation-Lichtwellenleiter-Rangierverteiler (DK-LWL-Rangierverteiler) mit einem aus Unterteil und Deckelteilen bestehenden Verteilergehäuse, das zwei Aufnahmekammern aufweist, die mittels der am Unterteil angelenkten Deckelteilen verschließbar sind, wobei die Aufnahmekammern über Kabeleinführungen zugänglich sind und Kassettenaufnahmen und dgl. aufnehmen, wobei das Unterteil als rechteckförmige Bodenwanne mit niedrigen Seitenwänden ausgebildet ist, und wobei die beiden Deckelteile mit ihren Seitenwänden auf die Einbauhöhe des Rangierverteilers ausgelegt sind und in der Schließstellung die Seitenwände des Unterteils teilweise überlappen.
Derartige DK-LWL-Rangierverteiler sind in der US-A-4 945 559 und US-A-5 274 731 beschrieben.

Bei den bekannten DK-LWL-Rangierverteilern dienen die beiden Aufnahmekammern zur Trennung der eingebauten Teile in ein Eingangs- und ein Ausgangsfeld. Dabei bestimmt die Höhe der Seitenwände des Unterteils die Einbauhöhe des DK-LWL-Verteilers. Die Anschluß- und Abgangskabel sind über tüllenartigen Kabeleinführungen in die oder aus den Aufnahmekammern geführt. Die Kabeleinführungen sind dabei in Durchbrüchen der Seitenwände des Unterteils eingerastet oder anderweitig festgelegt. Dies erschwert die Montage und die Verdrahtung des DK-LWL-Rangierverteilers erheblich, da die Anschluß- bzw. Abgangskabel in der Regel mit Steckeinrichtungen verbunden sind, die dann aber erst nach dem Einführen des Kabels in die zugeordnete Aufnahmekammer am Kabel angebracht werden können. Außerdem ist die unterschiedliche Ausstattung des DK-LWL-Rangierverteilers nicht ohne weiteres möglich.

Es ist Aufgabe der Erfindung, einen DK-LWL-Rangierverteiler der eingangs erwähnten Art zu schaffen, der in einfacher Weise an unterschiedliche Bestückungsarten angepaßt und verdrahtet werden kann.

Diese Aufgabe wird nach der Erfindung dadurch gelöst, daß an den beiden Schmalseiten des Unterteils die beiden Deckelteile angelenkt sind, daß die Deckelteile an den, den Scharnieren abgekehrten Seiten offen sind und sich auf einer, als Patchfeld ausgebildeten und auf die Einbauhöhe abgestimmten Trennwand abstützen und mittels Verschlüssen daran festlegbar sind, daß die Trennwand das Verteilergehäuse in die beiden Aufnahmekammern unterteilt, daß die senkrecht zu den Scharnieren stehenden Seitenwände von Unterteil und Deckelteilen pro Aufnahmekammer mit Ausnehmungen versehen sind, in die Kunststoff-Klemmprofile als Kabeleinführungen eingesetzt und daß im Anschluß an diese Kabeleinführungen in den Aufnahmekammern Kabelabfangschienen fest angebracht und die Kassettenaufnahmen zwischen den Kabelabfangschienen der Aufnahmekammern lösbar angeordnet sind.

Durch diese Ausgestaltung des Unterteils und der Deckelteile sind bei geöffneten Deckelteilen die Aufnahmekammern von zwei Seiten aus frei zugänglich, wobei die niedrigen Seitenwände des Unterteils den Ausbau des DK-LWL-Rangierverteilers und die anschließende Verdrahtung nicht behindern. Anschlußkabel können ohne Abnahme der Steckeinrichtungen in die Aufnahmekammern eingeführt und aus diesen herausgeführt werden, da diese erst in der Schließstellung der Deckelteile zwischen den einander zugeordneten Kunststoff-Klemmprofilen von Unterteil und Deckelteil festgelegt und abgedichtet werden. An allen vier Kabeleinführseiten sind fest angebrachte Kabelabfangschienen angebracht, so daß eine beliebige Kabelführung mit Zugentlastung ermöglicht wird. So kann in einer als Eingangsfeld verwendeten Aufnahmekammer ein Teil der eingeführten Leitungen wieder herausgeführt werden, während nur der restliche Teil über die als Patchfeld ausgebildete Trennwand in die als Ausgangsfeld verwendete Aufnahmekammer geführt wird. Da die Kassettenaufnahmen lösbar in den Aufnahmekammern untergebracht sind, können sie nach Bedarf ausgebildet werden, so daß auch Eingangs- und Ausgangsfeld vertauscht werden können.

Einen dicht verschließbaren DK-LWL-Rangierverteiler erhält man nach einer Ausgestaltung dadurch, daß das Unterteil in einen in der Stärke reduzierten Rand auslaufende Seitenwände aufweist, der einen umlaufenden Außenabsatz bildet, bis zu dem die Seitenwände der Deckelteile die Seitenwände des Unterteils überlappen und daß die Trennwand eine bügelartige Auflage bildet, die pro Deckelteil ein Dichtungselement trägt, das jeweils die offene Seite des Deckelteils zur Auflage hin abdichtet.

Ist zudem vorgesehen, daß die Verschlüsse unterschiedlich ausgebildet sind und mindestens einer davon plombierbar ist, dann werden auf einfache Weise unterschiedliche Zugangsberechtigungen zu den Aufnahmekammern geschaffen, so daß z.B. nur die Post Zugang zu der als Eingangsfeld verwendeten Aufnahmekammer besitzt, während der Kunde nur Zugang zu der als Ausgangsfeld verwendeten Aufnahmekammer erhält. Dabei kann der Verschluß zum Eingangsfeld plombiert sein, um eine Überwachung gegen unberechtigten Zugang zu erhalten.

Die Festlegung der Kunststoff-Klemmprofile in den Ausnehmungen der Seitenwände von Unterteil und Deckelteilen wird nach einer Ausgestaltung dadurch in einfacher Weise erreicht, daß die Kunststoff-Klemmprofile U-förmigen Querschnitt aufweisen und im Bereich der Ausnehmungen der Seitenwände von Unterteil und Deckelteilen auf die verbleibenden Teile der Seitenwände aufsteckbar sind und daß die Kunststoff-Klemmprofile selbstklebend ausgebildet sind.

Der Einbau der Kabelabfangschienen und der Kassettenaufnahmen in die Aufnahmekammern ist so gelöst, daß die Kabelabfangschienen und die Kassettenaufnahmen in den Aufnahmekammern mit dem Boden des Unterteils verbunden sind.

Ein Zugang zum Eingangsfeld über die Trennwand bzw. das Patchfeld wird auf einfache Weise dadurch verhindert, daß die Trennwand bzw. das Patchfeld plattenförmig ausgebildet und in einem Bügel als Auflage befestigt ist, wobei die Befestigungsstellen nur von einer zugeordneten, als Eingangsfeld ausgelegten Aufnahmekammer aus zugänglich und zu lösen sind.

Ist nach einer weiteren Ausgestaltung vorgesehen, daß die Scharniere als lösbare Stangenscharniere ausgebildet sind, dann wird bei abgenommenen Deckelteilen der Zugang zu den Aufnahmekammern für die Ausstattung und Verdrahtung des DK-LWL-Rangierverteiler noch verbessert, da dann über die Anlenkseiten die Einbauten auch leicht zugänglich sind.

Der Unterteil des DK-LWL-Rangierverteilers ist mit Wandbefestigungsaufnahmen versehen, da in der Regel eine Wandbefestigung vorgesehen ist.

Ist vorgesehen, daß die Kassettenaufnahmen einheitlich ausgebildete Befestigungsplatten zum Festlegen im Unterteil aufweisen, dann lassen sich in einfacher Weise die Aufnahmekammern mit unterschiedlich bestückten Kassettenaufnahmen ausrüsten.

Die Erfindung wird anhand eines in den Zeichnungen dargestellten Ausführungsbeispiels näher erläutert. Es zeigen.
- Fig. 1: in Seitenansicht einen DK-LWL-Rangierverteiler bei geöffneten Deckelteilen,
- Fig. 2: den DK-LWL-Rangierverteiler nach Fig. 1 in Draufsicht in die Aufnahmekammern gesehen,
- Fig. 3: die Draufsicht auf den geschlossenen DK-LWL-Rangierveteiler und
- Fig. 4: die Seitenansicht des geschlossenen DK-LWL-Rangierverteilers.

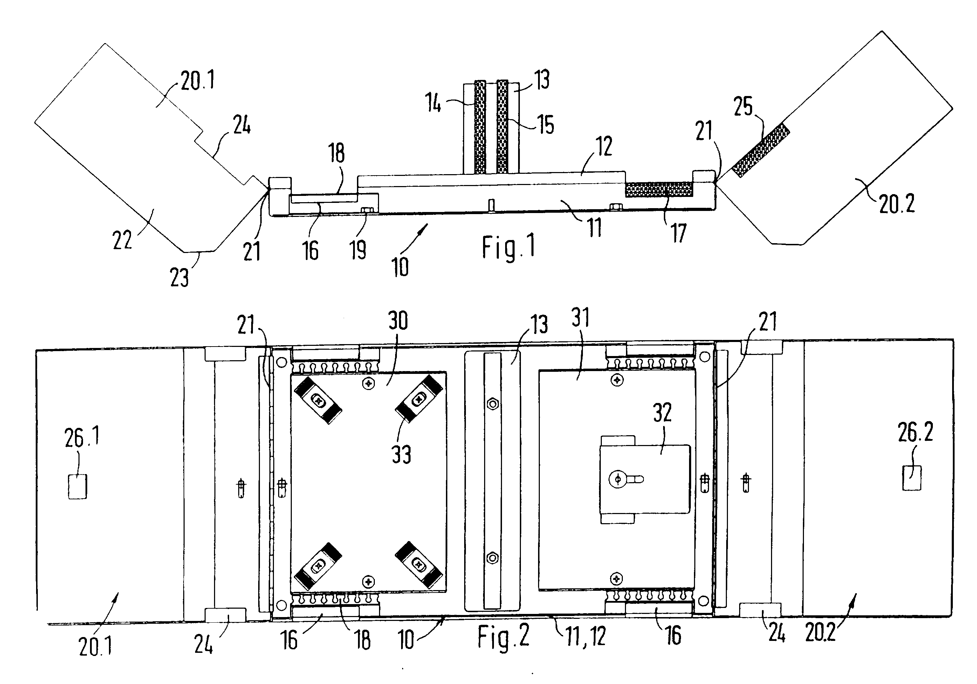

Wie die Fig. 1 zeigt, besteht der DK-LWL-Rangierverteiler aus einem aus Unterteil 10 und zwei Deckelteilen 20.1 und 20.2 bestehenden rechteckförmigen Gehäuse. Das Unterteil 10 ist als flache Bodenwanne ausgebildet, deren Seitenwände 11 sehr niedrig sind und in Ränder 12 auslaufen, die in der Stärke reduziert sind und umlaufend einen Außenabsatz bilden. Auf den Schmalseiten der Bodenwanne sind über Scharniere 21 die beiden Deckelteile 20.1 und 20.2 so angelenkt, daß in der Schließstellung die Deckelteile 20.1 und 20.2 mit ihren Seitenwänden 22 die Ränder 12 der Seitenwände 11 des Unterteils 10 überlappen und für einen dichten Abschluß sorgen. Die Seitenwände 22 der Deckelteile 20.1 und 20.2 bestimmen die Einbauhöhe des DK-LWL-Rangierverkehrs. Die Deckelteile 20.1 und 20.2 sind an den den Scharnieren 21 gegenüberliegenden Seiten offen und die zu den Scharnieren 21 parallelen Außenkanten der Deckelteile 20.1 und 20.2 sind abgeschrägt, wie die Bezugszeichen 23 zeigen. Die senkrecht zu den Scharnieren 21 stehenden Seitenwände 11 und 22 von Unterteil 10 und Deckelteilen 20.1 und 20.2 sind pro Aufnahmekammer mit aufeinander ausgerichteten Ausnehmungen 18 und 24 versehen, in die Kunststoff-Klemmprofile 17 und 25 eingesetzt sind, die paarweise eine Kabeleinführung bilden. Die Abteilung der Aufnahmekammern übernimmt eine Trennwand 13, die vorzugsweise als Patchfeld ausgebildet sein kann. Diese Trennwand 13 verläuft parallel zu den Scharnieren 21 und ist in der Mitte des Unterteils 10 angebracht. Dabei kann die Trennwand 13 plattenförmig ausgebildet und in einem Bügel befestigt sein, der als Auflage für die offenen Seiten der Deckelteile 20.1 und 20.2 dient.

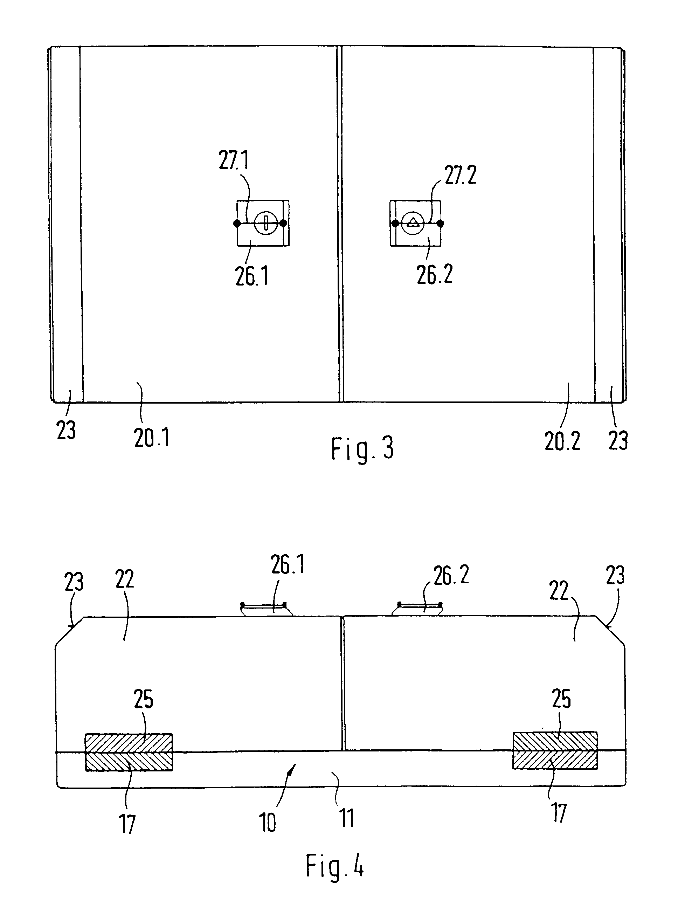

Die Auflage trägt Dichtungselemente 14 und 15, die die offenen Seiten der Deckelteile 20.1 und 20.2 zum Bügel der Trennwand 13 hin in der Schließstellung der Deckelteile 20.1 und 20.2 abdichten. Wie die Fig. 3 und 4 erkennen lassen, sind in die Deckelteile 20.1 und 20.2 im Bereich der offenen Seite Verschlüsse 26.1 und 26.2 eingebracht, die mit dem Bügel der Trennwand 13 z.B. nach Art eines Vorreibers zusammenarbeiten. Die Betätigung der Verschlüsse 26.1 und 26.2 kann über verschiedene Schlüssel ausgeführt werden, wie die Fig. 3 zeigt. Damit lassen sich unterschiedliche Zugangsberechtigungen für die Aufnahmekammern realisieren. Wie die Plombierdrähte 27.1 und 27.2 zeigen, können die Verschlüsse 26.1 und 27.1 plombiert werden, um unberechtigten Zugang zu den Aufnahmekammern erkennbar zu machen. Es kann dabei auch nur ein Verschluß, z.B. 26.1, plombiert werden, um den Zugang zu dem als Eingangsfeld verwendeten Teil des DK-LWL-Rangierverteilers entsprechend abzusichern. Die Trennwand 13 teilt die Aufnahmekammern ab und kann so nur dem Unterteil 10 verbunden sein, daß ihre Befestigungstellen nur vom Eingangsfeld her zugänglich und lösbar sind.

Damit kann vom Ausgangsfeld her die Trennwand 13 nicht entfernt werden, so daß sie das Eingangsfeld von dieser Seite aus absichert, auch wenn die Trennwand 13 als Patchfeld mit den für die Durchführung von Leitungen versehenen Verbindungselementen versehen ist.

Die Kunststoff-Klemmprofile 17 und 25 werden vorzugsweise selbstklebend ausgebildet und in die Ausnehmungen 18 und 24 des Unterteils 10 und der Deckelteile 20.1 und 20.2 eingeklebt. Der Querschnitt der Kunststoff-Klemmprofile 17 und 25 kann dabei U-förmig sein, so daß sie auf die restlichen Teile der Seitenwände 11 und 22 im Bereich der Seitenwände 11 und 22 aufgesteckt werden können. In der Schließstellung der Deckelteile 20.1 und 20.2 werden die einander zugeordneten Kunststoff-Klemmprofile 17 und 25 gegeneinander gedrückt und verformt, so daß dazwischen eingeführte oder herausgeführte Kabel fest umschlossen und abgedichtet werden, wie aus der Fig. 4 leicht abzuleiten ist. Der DK-LWL-Rangierverteiler hat daher auf seinen beiden Längsseiten pro Aufnahmekammer je eine breite Kabeleinführung, so daß für die Kabelführungen ausreichend Variationsmöglichkeiten gegeben sind.

Wie Fig. 2 zeigt, sind unmittelbar hinter den Kabeleinführungsstellen auf dem Boden des Unterteils 10 Kabelabfangschienen 18 fest angebracht, so daß in allen Fällen die Kabel bzw. die Leitungen derselben festgelegt und zugentlastet werden können. Zwischen den beiden Kabelabfangschienen 18 einer Aufnahmekammer ist eine Kassettenaufnahme 30 bzw. 31 lösbar einsetzbar. Die Kassettenaufnahmen 30 und 31 weisen identische Befestigungsplatten auf und können mit Kassettenführungen 32, Leitungshaltern 33 und dgl. versehen sein, d.h. verschieden ausgerüstet und auf besondere Anwendungszwecke ausgelegt sein. Der DK-LWL-Rangierverteiler ist daher leicht auf unterschiedliche Einsatzfälle anpaßbar, wobei die Aufnahmekammern auch vertauscht belegt werden können.

Die Scharniere 21 können als lösbare Stangenscharniere ausgebildet sein, so daß bei Ausführung der Montagearbeiten die Deckelseite 20.1 und 20.2 vom Unterteil 10 gelöst werden können, um den Zugang zu den Teilen in den Aufnahmekammern auch von den Anlenkseiten aus zu erleichtern.

Das Unterteil 10 weist im Boden ausgeprägte Schraubhülsen oder angeschweißte Muttern 19 auf, so daß die Kassettenaufnahmen 30 und 31 leicht mit dem Unterteil 10 verschraubt werden können.

## Patentansprüche

1. Datenkommunikation-Lichtwellenleiter-Rangierverteiler mit einem aus Unterteil (10) und Deckelteilen (20.1, 20.2) bestehenden Verteilergehäuse, das zwei Aufnahmekammern aufweist, die mittels der am Unterteil (10) angelenkten Deckelteilen (20.1, 20.2) verschließbar sind, wobei die Aufnahmekammern über Kabeleinführungen zugänglich sind und Kassettenaufnahmen (30, 31) und dgl. aufnehmen, wobei das Unterteil (10) als rechteckförmige Bodenwanne mit niedrigen Seitenwänden ausgebildet ist, und wobei die beiden Deckelteile (20.1, 20.2) mit ihren Seitenwänden (22) auf die Einbauhöhe des Rangierverteilers ausgelegt sind und in der Schließstellung die Seitenwände (11) des Unterteils (10) teilweise überlappen,
dadurch gekennzeichnet,
daß an den beiden Schmalseiten des Unterteils (10) die beiden Deckelteile (20.1, 20.2) angelenkt sind,
daß die Deckelteile (20.1, 20.2) an den, den Scharnieren (21) abgekehrten Seiten offen sind und sich auf einer, als Patchfeld ausgebildeten und auf die Einbauhöhe abgestimmten Trennwand (13) abstützen und mittels Verschlüssen (26.1, 26.2) daran festlegbar sind,
daß die Trennwand (13) das Verteilergehäuse in die beiden Aufnahmekammern unterteilt,
daß die senkrecht zu den Scharnieren (21) stehenden Seitenwände (11, 22) von Unterteil (10) und Deckelteilen (20.1, 20.2) pro Aufnahmekammer mit Ausnehmungen (16, 24) versehen sind, in die Kunststoff-Klemmprofile (17, 25) als Kabeleinführungen eingesetzt und
daß im Anschluß an diese Kabeleinführungen in den Aufnahmekammern Kabelabfangschienen (18) fest angebracht und die Kassettenaufnahmen (30, 31) zwischen den Kabelabfangschienen (18) der Aufnahmekammern lösbar angeordnet sind.

2. DK-LWL-Rangierverteiler nach Anspruch 1,
dadurch gekennzeichnet,
daß das Unterteil (10) in einen in der Stärke reduzierten Rand (12) auslaufende Seitenwände (11) aufweist, der einen umlaufenden Außenabsatz bildet, bis zu dem die Seitenwände (21) der Deckelteile (20.1,20.2) die Seitenwände (11) des Unterteils (10) überlappen.

3. DK-LWL-Rangierverteiler nach Anspruch 1 oder 2,
dadurch gekennzeichnet,
daß die Trennwand (13) eine bügelartige Auflage bildet, die pro Deckelteil (20.1,20.2) ein Dichtungselement (14, 15) trägt, das jeweils die offene Seite des Deckelteils (20.1,20.2) zur Auflage hin abdichtet.

4. DK-LWL-Rangierverteiler nach einem der Ansprüche 1 bis 3,
dadurch gekennzeichnet,
daß die Verschlüsse (26.1,26.2) unterschiedlich ausgebildet sind und mindestens einer davon plombierbar ist.

5. DK-LWL-Rangierverteiler nach einem der Ansprüche 1 bis 4,
dadurch gekennzeichnet,
daß die Kunststoff-Klemmprofile (17,25) U-förmigen Querschnitt aufweisen und im Bereich der Ausnehmungen (16,24) der Seitenwände (11,22) von Unterteil (10) und Deckelteilen (20.1,20.2) auf die verbleibenden Teile der Seitenwände aufsteckbar sind.

6. DK-LWL-Rangierverteiler nach Anspruch 5,
dadurch gekennzeichnet,
daß die Kunststoff-Klemmprofile (17,25) selbstklebend ausgebildet sind.

7. DK-LWL-Rangierverteiler nach einem der Ansprüche 1 bis 6,
dadurch gekennzeichnet,
daß die Kabelabfangschienen (18) und die Kassettenaufnahmen (30,31) in den Aufnahmekammern mit dem Boden des Unterteils (10) verbunden sind.

8. DK-LWL-Rangierverteiler nach einem der Ansprüche 1 bis 7,
dadurch gekennzeichnet,
daß die Trennwand bzw. das Patchfeld plattenförmig ausgebildet und in einem Bügel als Auflage befestigt ist, wobei die Befestigungsstellen nur von einer zugeordneten, als Eingangsfeld ausgelegten Aufnahmekammer aus zugänglich und zu lösen sind.

9. DK-LWL-Rangierverteiler nach einem der Ansprüche 1 bis 8,
dadurch gekennzeichnet,
daß die Scharniere (21) als lösbare Stangenscharniere ausgebildet sind.

10. DK-LWL-Rangierverteiler nach einem der Ansprüche 1 bis 9,
dadurch gekennzeichnet,
daß das Unterteil (10) mit Wandbefestigungsaufnahmen versehen ist.

11. DK-LWL-Rangierverteiler nach einem der Ansprüche 1 bis 10,
dadurch gekennzeichnet,
daß die Kassettenaufnahmen (30,31) einheitlich ausgebildete Befestigungsplatten zum Festlegen im Unterteil (10) aufweisen.

## Claims

1. Data communication light-wave conductor (DC LWC) shift distributor, having a distributor housing which comprises lower portion (10) and upper portions (20.1,20.2) and includes two receiving chambers which are closable by means of the upper portions (20.1,20.2) pivotally mounted on the lower portion (10), the receiving chambers being accessible via cable inlets and accommodating cassette receivers (30,31) and the like, the lower portion (10) being configured as a rectangular trough-shaped base with low lateral walls, and the two upper portions (20.1, 20.2) being adapted, with their lateral walls (22), to the installation height of the shift distributor and partially overlapping the lateral walls (11) of the lower portion (10) in the closed position, characterised in that the two upper portions (20.1,20.2) are pivotally mounted on the two narrow sides of the lower portion (10), in that the upper portions (20.1,20.2) are open at the sides remote from the hinges (21) and are supported on a dividing wall (13), which is configured as a patch panel and adapted to the installation height, and said upper portions are securable on said dividing wall by means of closures (26.1,26.2), in that the dividing wall (13) divides the distributor housing into the two receiving chambers, in that the lateral walls (11,22) of lower portion (10) and upper portions (20.1,20.2) perpendicidular to the hinges (21) are provided, per receiving chamber, with recesses (16,24) into which are inserted plastics material clamping profiles (17, 25) as the cable inlets, and in that cable collecting bars (18) are securedly mounted in the receiving chambers in addition to these cable inlets, and the cassette receivers (30,31) are detachably disposed between the cable collecting bars (18) of the receiving chambers.

2. DC LWC shift distributor according to claim 1, characterised in that the lower portion (10) has lateral walls (11), which extend into an edge (12) which has a reduced thickness and forms a peripheral external shoulder portion, the lateral walls (22) of the upper portions (20.1,20.2) overlapping the lateral walls (11) of the lower portion (10) as far as said shoulder portion.

3. DC LWC shift distributor according to claim 1 or 2, characterised in that the dividing wall (13) forms a clamp-like support which is provided with one sealing member (14,15) per upper portion (20.1,20.2), said sealing member sealing the open side of each respective upper portion (20.1,20.2) towards the support.

4. DC LWC shift distributor according to one of claims 1 to 3, characterised in that the closures (26.1,26.2) have different configurations, and at least one of them is lead-sealable.

5. DC LWC shift distributor according to one of claims 1 to 4, characterised in that the plastics material clamping profiles (17,25) have a U-shaped cross-section and are mountable, in the region of the recesses (16,24) in the lateral walls (11,22) of the lower portion (10) and upper portions (20,1,20.2), on the remaining parts of the lateral walls.

6. DC LWC shift distributor according to claim 5, characterised in that the plastics material clamping profiles (17,25) are adapted to be self-adhesive.

7. DC LWC shift distributor according to one of claims 1 to 6, characterised in that the cable collecting bars (18) and the cassette receivers (30,31) are connected to the base of the lower portion (10) in the receiving chambers.

8. DC LWC shift distributor according to one of claims 1 to 7, characterised in that the dividing wall, or respectively the patch panel, has a plate-like configuration and is secured in a clamp as the support, the securing locations only being accessible from an associated receiver chamber configured as the inlet area and having to be detached.

9. DC LWC shift distributor according to one of claims 1 to 8, characterised in that the hinges (21) are configured as detachable rod hinges.

10. DC LWC shift distributor according to one of claims 1 to 9, characterised in that the lower portion (10) is provided with wall securing receivers.

11. DC LWC shift distributor according to one of claims 1 to 10, characterised in that the cassette receivers (30,31) have uniformly configured securing plates for securement in the lower portion (10).

## Revendications

1. Dispositif de distribution pour l'agencement de fibres optiques à constante diélectrique avec un boîtier de distribution constitué d'une partie inférieure (10) et de parties de couvercle (20.1, 20.2), boîtier qui présente deux chambres d'insertion qui peuvent être fermées au moyen de parties de couvercle (20.1, 20.2) articulées sur la partie inférieure (10), où les chambres d'insertion sont accessibles grâce à des entrées de câble et reçoivent des logements de cassettes (30, 31) et similaires, où la partie inférieure (10) a la forme d'une cuve de base rectangulaire à parois latérales de faible hauteur, et où les deux parties de couvercle (20.1, 20.2) présentent des parois latérales (22) adaptées à la hauteur du dispositif de distribution et chevauchent partiellement, en position de fermeture, les parois latérales (11) de la partie inférieure (10),
caractérisé
en ce que sur les deux petits côtés de la partie inférieure (10) sont articules les deux parties de couvercle (20.1, 20.2),
en ce que les parties de couvercle (20.1, 20.2) sont ouvertes sur les côtés non orientés vers les charnières et s'appuient sur une paroi de séparation (13) tachetée et adaptée à la hauteur de montage et peut y être assujettie au moyen de fermetures (26.1, 26.2),
en ce que la paroi de séparation (13) partage le boîtier de distribution en deux chambres d'insertion,
en ce que les parois latérales (11, 22), perpendiculaires aux charnières, de la partie inférieure (10) et des parties de couvercle (20.1, 20.2) présentent, pour chaque chambre d'insertion, des évidements (16, 24), dans lesquels sont insérés des profilés de serrage (17, 25) en matière plastique faisant fonction d'entrées de câble, et
en ce que en raccordement à ces entrées de câble, des rails de réception de câble (18) sont fixés rigidement dans les chambres d'insertion et en ce que les logements pour cassette (30, 31) sont disposés de manière amovible entre les rails de réception de câble (18) des chambres d'insertion.

2. Dispositif de distribution pour l'agencement de fibres optiques à constante diélectrique suivant la revendication 1,
caractérisé
en ce que la partie inférieure (10) présente des parois latérales (11) se terminant par un bord (12) d'épaisseur réduite, bord (12) qui constitue un épaulement extérieur périphérique, jusqu'auquel les parois latérales (21) des parties de couvercle (20.1, 20.2) chevauchent les parois latérales (11) de la partie inférieure (10).

3. Dispositif de distribution pour l'agencement de fibres optiques à constante diélectrique suivant la revendication 1 ou la revendication 2,
caractérisé
en ce que la paroi de séparation (13) constitue un appui en forme d'étrier, qui pour chaque partie de couvercle (20.1, 20.2) porte un élément d'étanchéité (14, 15), qui rend hermétique la jonction entre le côté ouvert de la partie de couvercle (20.1, 20.2) et l'appui.

4. Dispositif de distribution pour l'agencement de fibres optiques à constante diélectrique suivant l'une quelconque des revendications de 1 à 3,
caractérisé
en ce que les fermetures (26.1, 26.2) sont de constructions différentes et en ce qu'au moins l'une d'elles peut être plombée.

5. Dispositif de distribution pour l'agencement de fibres optiques à constante diélectrique suivant l'une quelconque des revendications de 1 à 4,
caractérisé
en ce que les profilés de serrage en matière plastique (17, 25) présentent une section transversale en forme de U et peuvent, dans la région des évidements (16, 24) des parois latérales (11, 22) de la partie inférieure (10) et des parties de couvercle (20.1, 20.2), être enfichées sur les parties restantes des parois latérales.

6. Dispositif de distribution pour l'agencement de fibres optiques à constante diélectrique suivant la revendication 5,
caractérisé
en ce que les profilés de serrage en matière plastique (17, 25) sont autocollants.

7. Dispositif de distribution pour l'agencement de fibres optiques à constante diélectrique suivant l'une quelconque des revendications de 1 à 6,
caractérisé
en ce que les rails de réception de câble (18) et les logements de cassette (30, 31) dans les chambres d'insertion sont reliés au fond de la partie inférieure (10).

8. Dispositif de distribution pour l'agencement de fibres optiques à constante diélectrique suivant l'une quelconque des revendications de 1 à 7,
caractérisé
en ce que la paroi de séparation ou le champ tacheté est en forme de plaque et est fixé dans un étrier faisant fonction d'appui, où les points de fixation sont accessibles et peuvent être défaits uniquement au travers une chambre d'insertion associée, conçue en tant que champ d'entrée.

9. Dispositif de distribution pour l'agencement de fibres optiques à constante diélectrique suivant l'une quelconque des revendications de 1 à 8,
caractérisé
en ce que les charnières (21) sont des charnières amovibles à tringle.

10. Dispositif de distribution pour l'agencement de fibres optiques à constante diélectrique suivant l'une quelconque des revendications de 1 à 9,
caractérisé
en ce que la partie inférieure est dotée de logements de fixation de paroi.

11. Dispositif de distribution pour l'agencement de fibres optiques à constante diélectrique suivant l'une quelconque des revendications de 1 à 10,
caractérisé
en ce que les logements de cassette (30, 31) présentent des plaques de fixation uniformisées pour la fixation à la partie inférieure (10).
